# EUROPEAN PATENT APPLICATION

(11) **EP 3 473 666 A1**
(43) Date of publication of application: **24.04.2019**
(21) Application number: 18199340.3
(22) Date of filing: 09.10.2018
(51) Int. Cl.: C08J 9/00

(54) **FLEXIBLE FOAM MADE OF AN EXPANDED POLYMERIC MATERIAL WITH A BIOENERGETIC EFFECT AND METHOD FOR PRODUCING SAID FOAM**

(30) Priority: 17.10.2017 IT 201700117264
(71) Applicant: Olmo Giuseppe S.p.A., 24040 Comun Nuovo (BG) (IT)
(72) Inventor: TONINELLI, Marcella, 24040 Comun Nuovo (BG) (IT); NEUKIRCH, Hannes, 24040 Comun Nuovo (BG) (IT)
(74) Representative: Rastelli, Franco

(57) **Abstract**

A flexible foam made of an expanded polymeric material that contains bio-crystals with an invigorating influence on the human body and has a cellular structure, inside which said bio-crystals with an invigorating influence are incorporated. Thanks to the flexible foams made of an expanded polymeric material of the invention, said crystals can be brought to the immediate vicinity of the human body, so as to transmit their invigorating influence to the latter.

## Description

### BACKGROUND OF THE INVENTION

The present invention relates to a flexible foam made of an expanded polymeric material with a bioenergetic effect. The invention also covers a method for producing said foam.

The field of the invention is that of flexible foams made of an expanded polymeric material, for example, polyurethane foams, latex and the like, used for manufacturing articles intended to come into contact with the human body. Examples of these articles include mattresses for beds and sofas, seat cushions in general, padding for footwear and clothing articles in general, and the like.

There are products on the market that perform an invigorating function for the human body, for example, those known as "Biocrystal"® by Biocrystal Technologies d.o.o. (Croatia). In particular, those are mixtures of different crystals (fluorite, jasper, aragonite, quartz, etc.), known for their properties of having an invigorating influence on the human body, especially on temperature, muscular activity, heart rate, skin conductivity and respiration values. An increase in metabolic activity is also associated with these phenomena.

### SUMMARY OF THE INVENTION

The main object of the present invention consists in providing a flexible foam made of an expanded elastomeric material, with a function of support material for containing the aforementioned bio-crystal mixture and designed to transmit their invigorating effect to the human body.

This and other objects are achieved with the flexible foam and with the method set forth in claims 1 and 6, respectively. The remaining claims relate to preferred ways of implementing the invention.

Thanks to the flexible foams made of an expanded polymeric material of the invention, the aforementioned bio-crystals can be brought to the immediate vicinity of the human body, so as to transmit their invigorating influence to the latter.

### BRIEF DESCRIPTION OF THE DRAWINGS

These and other objects, advantages and characteristics shall become apparent from the following description of some preferred embodiments of the flexible foam of the invention, provided by way of non-limitative example and shown in the figures of the accompanying drawing sheets,
wherein:
- Figures 1A and 1B schematically show the bio-crystals constituting the bio-crystal mixture used in the method of the invention and the mixture itself;

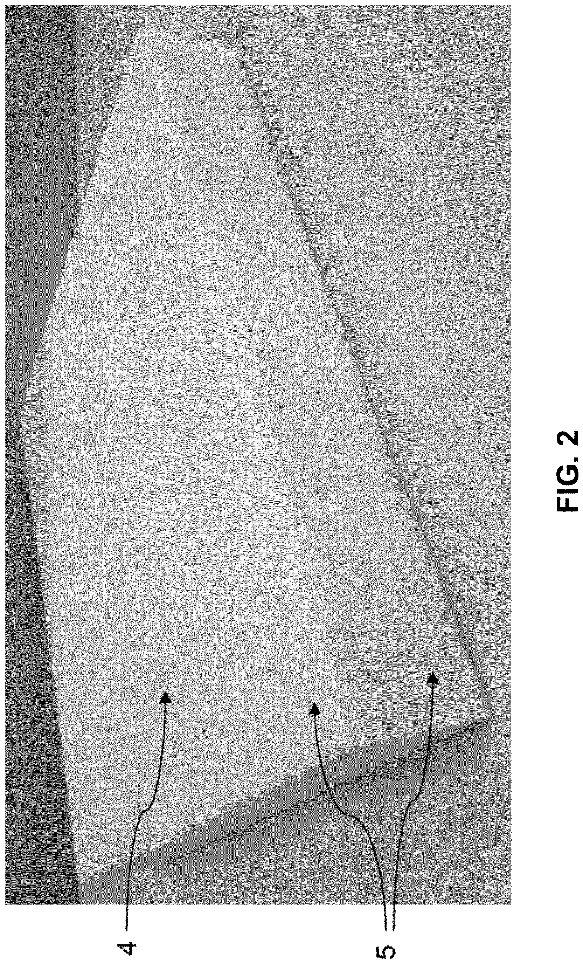

- Figure 2 shows, in section, a slab made with the foam of the invention;
- Figure 3 shows a flowchart of the method of the invention; and
- Figure 4 shows, in section, an example of an armchair/sofa seat cushion prepared with the flexible foam of the invention.

### DESCRIPTION OF THE PREFERRED EMBODIMENTS

The flexible foam of the invention is produced as a material for making padding for furnishings, mattresses, pillows, and articles for the bedding, footwear and automotive industries.

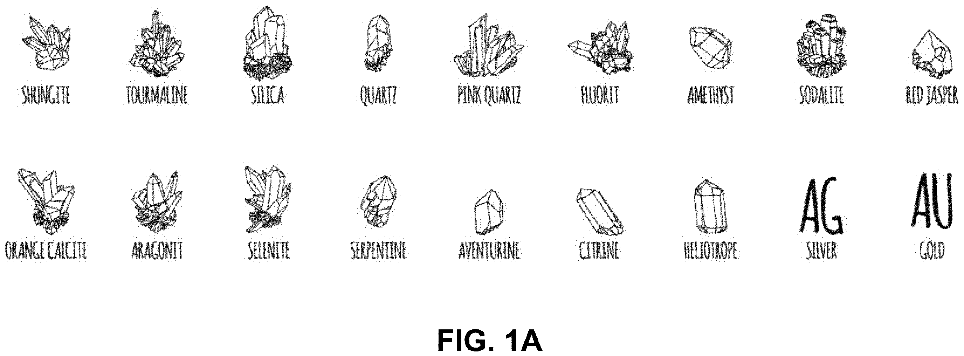

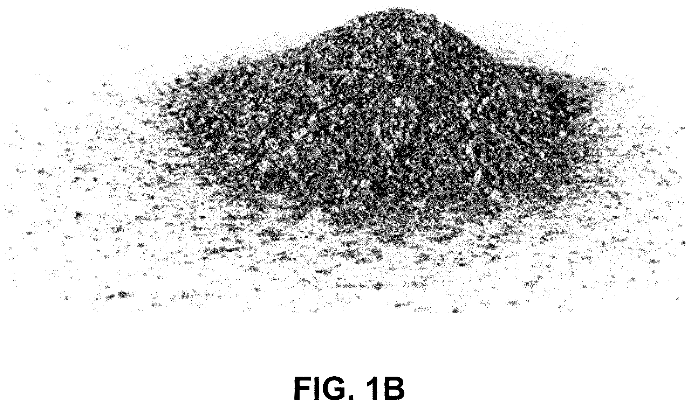

A mixture of bio-crystals 5, for example, as shown in Figures 1A and 1B, is used in preparation of the foams of the invention. In this case, it is a mixture of bio-crystals that exhibit an invigorating influence on the human body, generally formed by 16 different types of bio-crystals, with variable sizes from 0.01 mm to 2.0 mm, preferably from 0.05 mm to 1.0 mm, and even more preferably from 0.1 mm to 0.5 mm, with the addition of gold and silver.

Preferred for the invention are mixtures of "Biocrystal"® bio-crystals by Biocrystal Technologies d.o.o. (Croatia), known for their invigorating influence on the human body when placed in proximity to the latter and comprising shungite, tourmaline, silica, quartz, pink quartz, sodalite, red jasper, orange calcite, aragonite, selenite, serpentine, aventurine, citrine, heliotrope, fluorite and amethyst, enriched with gold and silver. According to the invention, other crystals in general can also be added to said bio-crystal mixture.

According to the invention, the aforementioned bio-crystals are dispersed in the mass of a flexible foam made of an expanded polymeric material, such as, for example, polyurethane foams and latex foams.

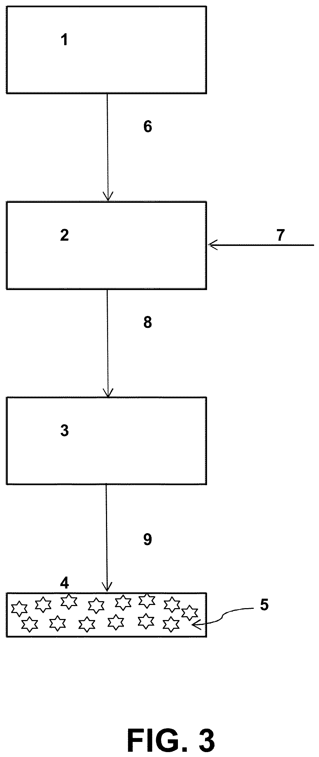

The manufacture of polyurethane-based foams of the invention is performed according to the flowchart shown in Figure 3.

The method starts with making a mixture 6 consisting of a dispersant (for example, a polyhydric alcohol), a mixture 5 of bio-crystals with an invigorating influence on the human body, and a stabilizer, in particular a surface-active agent suitable for making the dispersion of the bio-crystal mixture 5 homogeneous inside the mixture 6 formed in the mixer 1.

The thus-obtained mixture 6 is then transferred to a reactor 2, in which it is placed in contact with polyhydric alcohols, isocyanates, water, catalysts and stabilizers 7, so as to form a mixture 8 that subsequently expands and stabilizes in a step 3. In this way, a slab 4 of flexible expanded polymeric foam is obtained, inside which, the bio-crystals 5 are dispersed.

The bio-crystal mixture 5 is dispersed in the mixture 6 used for the formation reaction of said foam in a quantity ranging between 0.1% and 20.0% by weight, preferably ranging between 0.5% and 5.0% and, even better, between 1.0% and 3.0%, calculated on the weight of the expanded resin foam obtained from the reaction mixture 6.

To perform this operation, it is necessary that the bio-crystal mixture be dispersed in one of the components of the reaction mixture 6 in a quantity below 50%, calculated on the weight of the expanded resin obtained from the reaction mixture.

The invention is thus directed to the manufacture of a flexible foam made of an expanded polymeric material, constituted by a cellular structure, inside which said crystals of the mixture 5 with an invigorating influence are incorporated, which crystals in this way become part of the cellular structure. The physical/mechanical characteristics of the resin constituting the foam are modified by the presence of said crystals.

Specifically, according to the invention, the bio-crystals constituting said mixture 5 adhere to the walls of the expanded polymer cells, so as to make the invigorating influence of said bio-crystals available towards the outer part of the flexible foam.

The foams obtained via this production process have an optimal density ranging between 20.0 kg/m³ and 130 kg/m³, preferably less than 100.0 kg/m³, and even more preferably less than 80.0 kg/m³. The hardness of the foams of the invention is less than 21.0 Kpa, for example, ranging between 0.8 Kpa and 21 Kpa, preferably less than 10.0 Kpa, even more preferably less than 5.0 Kpa, and optimal if ranging between 1.0 Kpa and 5.0 Kpa.

The foam of the invention also has a rebound resilience ranging between 3% and 80%. In order to have a foam with good characteristics, the SAG factor, which is an index of comfort (the higher the factor, the greater the comfort of the material), if possible, must be greater than 1.5. The rebound resilience of the resin depends on the type of expanded foam. In the case of standard foams, the rebound resilience is greater than 30%, better if greater than 35% and even better if greater than 40%. In the case of HR (High Resilience) foams, the rebound resilience is greater than 40%, better if greater than 50%, and even better if greater than 60%. In the case of viscoelastic foams, the preferred rebound resilience is less than 25%, better if less than 20%, and even better if less than 15%.

To produce the mixture 6 containing the mixture 5 of bio-crystals with an invigorating influence of the invention, a liquid dispersant is used that is generally a polyhydric alcohol with a molecular weight ranging between 200 and 10,000, and with 20 to 300 hydroxyls (OH). It is also possible to produce the mixture by using isocyanate as the dispersing agent.

The bio-crystals are dispersed in one of the components of the reaction mixture 6 in a quantity less than 50%, preferably less than 30%, and even better less than 20%, calculated on the weight of the expanded resin obtained from the reaction mixture.

A further possibility of inserting the bio-crystals in the foam is to dose them directly, without premixing them with a dispersing agent.

The "polyisocyanate" component is generally constituted by a single polyisocyanate, but it is possible to have multiple polyisocyanates. The polyisocyanates generally used in the preparation of the foam of the invention include aliphatic, cycloaliphatic and aromatic polyisocyanates, such as TDI (toluene diisocyanate) and pure or polymeric MDI (methylene diphenyl diisocyanate). Modified isocyanates are also suitable for the invention, these being obtained from the reaction of commercial isocyanates such as TDI and MDI with diols or amines of low molecular weight. They can also be obtained through the reaction of the isocyanate with itself. The index of the isocyanate used in the reaction can vary from 70 to 120, and the higher the level of isocyanate, the harder the foam.

The foaming agent used is water, which can also be used in combination with other low-boiling-point foaming agents. The quantity of foaming agent varies depending on the density it is wished to obtain.

The formula used for obtaining the expanded foam of the invention contains one or more additives, which include catalysts such as tertiary amines and tin compounds, stabilizers such as siloxane-oxyalkylene copolymers, flame retardants, colouring agents, and organic or inorganic compounds.

According to one example of preparation of the foam of the invention, as shown in Figure 3, bio-crystals with sizes of 0.1-0.4 mm are used. The mixing temperature in the mixer 1 is kept at approximately 20-25°C and arrives up to a maximum of 165°C in step 3.

According to the invention, the quantity of bio-crystal mixture present is such that from 0.05 g to 10 g of bio-crystal mixture 5 are present for every 100 cm² of the surface of one of the larger side faces of the slab 4 of flexible foam made of an expanded polymer material, independently of the thickness of the slab 4. Thus, for example, a slab with a surface of 100 cm² and a thickness of 5 cm, will contain the same quantity of a bio-crystal mixture 5 as a slab with a surface of 100 cm² and a thickness of 10 cm. Furthermore, for example, a slab 4 with a 200 cm x 90 cm surface will contain from 10 g to 2000 g of a bio-crystal mixture 5, preferably 50 g of said bio-crystal mixture.

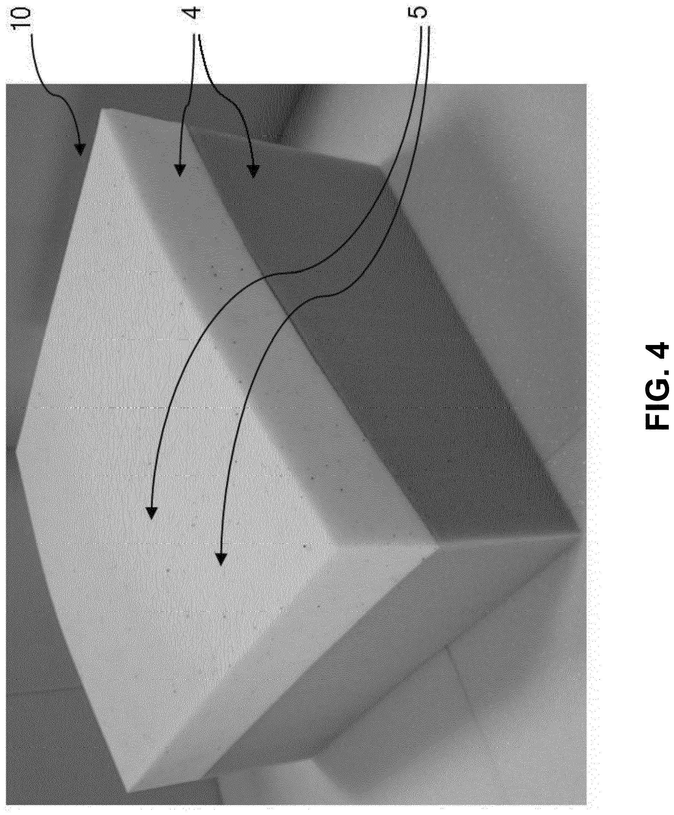

In this way, articles can be made such as the cushion 10 shown in Figure 4, formed by a plurality of stacked slabs 4 of flexible expanded foam containing the bio-crystals.

The invigorating influence of the foam of the invention on the human body has been verified through testing, in which persons or subjects have sat on a slab of polymeric foam containing bio-crystals 5.

### TEST PROCEDURE

The tests were carried out in a separate room where there were no other activities that could interfere with the measurements. A table with a computer and the equipment necessary for measuring the physiological parameters were placed inside the room. During the measurements, the subjects undergoing the test remained seated for approximately half an hour on a comfortable chair, while skin conductivity, heart rate, muscular activity, frequency of respiration and body temperature were measured through the use of a special device attached to a fingertip.

During the test, the foam of the invention and the control foam were placed on a wooden chair and covered with a cotton cloth so that no one could know which foam was being used. The subjects sat directly on the cotton cloth.

The electrodes necessary for the test were positioned on both arms. The positive electrode and the earth necessary for measuring the heart rate were positioned on the left arm. The electrodes for measuring skin conductivity and body temperature were positioned on the fingertips of the left hand. The negative electrode for measuring the heart rate and both electrodes for muscular activity were positioned on the right arm.

The subject was left alone in the room during the measurements so as to exclude external disturbances as far as possible. The subjects were however exposed to average environmental electromagnetic pollution, as close as possible to situations of everyday life.

The test assistant left the room as soon as everything was ready for the test and started the measurement process. Since the foam had been prepared by a third person, neither the subject undergoing the test nor the test assistant knew which foam was being used.

### MEASUREMENT OF PHYSIOLOGICAL PARAMETERS

Measurement of the physiological parameters enables monitoring changes in the body of a given person in real time. It is possible to check the condition of a subject throughout the entire period of measurement. The physiological parameters measured are the following:
- Heart rate (HR), which is visible in the form of an electrocardiogram (ECG), from which it is possible to deduce the heart rate variability (HRV).
- Muscular activity (electromyogram, EMG), which is measured on the left forearm. This shows any anomalies that might appear on the ECG due to subjects moving.
- The skin conductivity (SC) and body temperature (TEMP) measurements were taken on the fingertips of the left hand, where skin conductivity varies the most. Skin conductivity monitoring is also used in lie detectors (polygraph machines), because perspiration and skin conductivity are regulated by the parasympathetic nervous system. The latter is part of the autonomic nervous system, which is not controlled by our will, and therefore is beyond our control. In general terms, skin conductivity is higher when a person is under stress (there is greater perspiration and higher blood flow), but the reactions can be much more complex.
- The state of respiration (RESP) is monitored with a special extensible elastic belt, through measuring expansion of the chest, which enables calculating the number of breaths per minute (BPM) and the depth of breathing (RESPV)

The entire procedure was divided into two parts:
- The first part of the test running from the beginning until 12 minutes and 30 seconds had passed.
- The second part of the test from 12 minutes and 30 second until 25 minutes had passed.

Statistical analysis was then carried out separately on both parts of the test.

### CONCLUSIONS

The measurements taken with the foam of the invention have demonstrated that this product influenced the tests and, with the monitoring of the various physiological parameters, it was possible to observe statistically significant differences between the foam of the invention and the control foam.

The invigorating influence of this product was observed in both parts of the measurements on the frequency of respiration and body temperature; in the first part of the test on the state of respiration, and in the second part on muscular activity, heart rate and skin conductivity.

The response of subjects to exposure to the foam of the invention is found to be complex, because it is not unified for the various physiological parameters. The values for most of the parameters are lower with the foam of the invention compared to the control foam; with the exception of respiration frequency where the opposite happens. The drop in temperature, muscular activity, heart rate, skin conductivity and state of respiration values indicate that the subjects are more relaxed when exposed to the foam of the invention in comparison with the control foam. At the same time, the foam of the invention has induced higher metabolic activity as a higher frequency of respiration has been detected in comparison with that of the control sample.

When the results of these measurements were compared with the long-term control average, two response patterns were encountered. The respiration frequency revealed a model that is usual in tests for invigorating influence as both controls are very similar, while the foam of the invention differs from both. This is a model that it was expected to find in measurements of the foam of the invention. Nevertheless, another response model is visible for temperature and heart rate, a model generally customary for protective devices. Assuming that there is a greater electromagnetic pollution than normal, in this case the foam of the invention has demonstrated a strong protective effect because the values are close to the long-term control. There is an indication from these three parameters that the foam of the invention has a relaxing effect and that it can also have a protective influence on the human body.

The foam of the invention has thus satisfied all the necessary criteria for obtaining certification of energetic influence on the human body.

### KEY TO FIGURES

- 1: Container with the mixture of bio-crystals
- 2: Reactor
- 3: Expansion and stabilization of block
- 4: Slab of expanded foam
- 5: Bio-crystal mixture
- 6: Reaction mixture
- 7: Transfer of the other reaction components to the reactor
- 8: Formation of the mixture that then expands
- 9: Transformation (slabs, sheets, shaped parts, etc.)
- 10: Cushion

## Claims

1. A flexible foam made of an expanded polymeric material, **characterized in that** it contains a mixture (5) of bio-crystals with an invigorating influence on the human body, wherein said bio-crystal mixture (5) comprises shungite, tourmaline, silica, quartz, pink quartz, sodalite, red jasper, orange calcite, aragonite, selenite, serpentine, aventurine, citrine, heliotrope, fluorite and amethyst, enriched with gold and silver.

2. The foam according to claim 1, **characterized in that** it has a cellular structure, inside which said mixture (5) of bio-crystals with an invigorating influence is incorporated.

3. The foam according to claim 2, **characterized in that** it has the form of a slab (4) containing a quantity of bio-crystal mixture (5) such that from 0.05 g to 10.0 g of said bio-crystal mixture are present for every 100 cm² of the surface of one of the larger side faces of said slab (4), independently of the thickness of the slab (4).

4. The foam according to claim 3, **characterized in that** said mixture (5) of bio-crystals with an invigorating influence on the human body is generally formed by types of crystals, with variable sizes from 0.01 mm to 2.0 mm.

5. The foam according to claim 4, **characterized in that** it has a density ranging between 20.0 kg/m³ and 130 kg/m³, a hardness of less than 21.0 Kpa and a rebound resilience ranging between 3% and 80%.

6. A method for producing a flexible foam according to one or more of the preceding claims, **characterized in that** it provides the creation of a dispersion of said bio-crystal mixture (5) in the mixture (6) used for the formation reaction of said foam.

7. The method according to claim 6, **characterized in that** it provides:
- the creation of a mixture (6) of a dispersant with said bio-crystal mixture (5), in the presence of a stabilizer suitable for making the dispersion of the bio-crystal mixture (5) inside said mixture homogeneous;
- the transfer of said mixture (6) to a reactor (2), in which it is placed in contact with polyhydric alcohols, isocyanates, water, catalysts and stabilizers, so as to form a mixture (8) that subsequently expands and stabilizes in a block in the next step (3) to provide a flexible expanded polymeric foam that can be cut into a slab (4) following a transformation process (9), inside which said bio-crystal mixture (5) is dispersed.

8. The method according to claim 7, **characterized in that** said bio-crystal mixture (5) is dispersed in the reaction mixture (6) in a quantity ranging between 0.1% and 20% by weight of the expanded resin obtained from said reaction mixture (6).

9. An article manufactured with the foam and method according to one or more of the preceding claims, **characterized in that** it is a padding for furnishings, mattresses, pillows, and articles for the bedding, footwear and automotive industries.
